# EUROPÄISCHE PATENTSCHRIFT

(11) **EP 1 841 583 B1**
(45) Veröffentlichungstag und Bekanntmachung des Hinweises auf die Patenterteilung: **15.07.2009**
(21) Anmeldenummer: 06701204.7
(22) Anmeldetag: 10.01.2006
(51) Int. Cl.: B29C 43/52, B29C 43/46, F28F 5/02

(54) **VORRICHTUNG ZUR KALANDRIERUNG VON KONTINUIERLICH HERGESTELLTEN GEGENSTÄNDEN MIT MINDESTENS EINER KALANDERWALZE**
DEVICE FOR CALENDERING CONTINUOUSLY PRODUCED OBJECTS USING AT LEAST ONE CALENDER ROLL
DISPOSITIF DOTE D'AU MOINS UN ROULEAU DE CALANDRE POUR CALANDRER DES OBJETS FABRIQUES EN CONTINU

(30) Priorität: 14.01.2005 DE 102005001782
(43) Veröffentlichungstag der Anmeldung: 10.10.2007
(73) Patentinhaber: KraussMaffei Berstorff GmbH, 30625 Hannover (DE)
(72) Erfinder: SCHOPPE, Dieter, 37627 Stadtoldendorf (DE)
(74) Vertreter: Zollner, Richard
(86) Internationale Anmeldenummer: PCT/EP2006/050118
(87) Internationale Veröffentlichungsnummer: WO 2006/074994

(56) Entgegenhaltungen:
- EP-A- 0 861 715
- WO-A-97/21969
- DE-A1- 2 707 907
- US-A- 5 590 704
- US-A1- 2005 003 939

## Beschreibung

Die Erfindung betrifft eine Vorrichtung zur Kalandrierung von kontinuierlich hergestellten Gegenständen mit mindestens einer Kalanderwalze, wobei die Kalanderwalze mittels mindestens eines Antriebs in eine Rotationsbewegung versetzbar ist, wobei mindestens eine Kalanderwalze temperierbar ist und die Temperierung der Kalanderwalze mittels eines Temperiermittels erfolgt und die Kalanderwalze mit einer Wechselhülse ausgestattet ist.

Vorrichtungen zur Kalandrierung von Elastomeren - Kautschukmischungen - oder thermoplastischen Kunstoffen zu Gegenständen, wie beispielsweise Flachprodukten wie profilierten oder unprofilierten Bahnen oder Folien, sind in der Praxis seit längerem bekannt. Hierbei handelt es sich häufig um Extruder-Kalander-Anlagen mittels derer Elastomere oder thermoplastische Kunststoffe verarbeitet werden. Sollen Profilbahnen aus Elastomeren oder geprägte Folien aus thermoplastischen Kunststoffen hergestellt werden, so werden häufig derartige Vorrichtungen eingesetzt, wobei der Kalander Walzen aufweist, welche mit einem Profil versehen sind. Eine solche Vorrichtung ist beispielsweise in der DE 28 56 096 A1 gezeigt. In dieser Vorrichtung werden plastische Materialien mittels eines Extruders plastifiziert und mittels eines Kalanders weiterverarbeitet. Der Kalander weist hierbei Walzen auf, mittels derer das plastifizierte Material verarbeitet wird. Ferner sind aus der DE 44 12 862 C1 Walzenwechselvorrichtungen bekannt, die es ermöglichen, einen schnellen Walzenwechsel an einem Kalander vorzunehmen, um auch unter hoher Belastung eine sehr gute Produktionstoleranz einzuhalten.

Aus der EP 0 861 715 A2 ist es bekannt, bei einer Vorrichtung zur Kalandrierung eine Kalanderwalze mit einer elastisch ausgestalteten Wechselhülse auszustatten. Die Wechselhülse wird mittels Temperiermittel temperiert, das von einer Seite über die Antriebswelle eingebracht und auf der anderen Seite ausgebracht wird. Die elastische Wechselhülse wird zudem durch das Temperiermittel stabilisiert, so dass es im Fall eines Hülsenwechsels zuvor abgelassen werden muss.

Bei anderen Ausgestaltungen, die aus dem Stand der Technik bekannt sind, werden die Walzen eines Kalanders mittels einer aufwendigen Gelenkkupplung und eines Sonderhohlwellengetriebs angetrieben. Die Temperierung der Walze erfolgt hierbei über eine Drehdurchführung mittels eines Doppelrohrs durch das Sondergetriebe und durch die Gelenkkupplung. Auch diese Ausgestaltungen weisen die bereits zuvor genannten Probleme auf. Zudem ist die Abdichtung des Temperiermittelkreislaufs problematisch und müssen der Antrieb und die Kalanderwalze hierbei sehr genau aufeinander ausgerichtet werden.

Der vorliegenden Erfindung liegt daher die Aufgabe zugrunde, eine Vorrichtung zur Kalandrierung der eingangs genannten Art anzugeben, bei der eine einfache und kostengünstige Konstruktion möglich ist.

Erfindungsgemäß wird die voranstehende Aufgabe durch die Vorrichtung zur Kalandrierung mit den Merkmalen des Patentanspruchs 1 gelöst. Danach ist die in Rede stehende Vorrichtung derart ausgestaltet und weitergebildet, dass das Temperiermittel durch eine Hohlwellendrehdurchführung in eine die Kalanderwalze antreibende Antriebswelle einbringbar ist, wobei in der Hohlwellendrehdurchführung eine Temperiermittelverteilung und eine Öffnung hin zur Antriebswelle der Kalanderwalze vorgesehen ist, die Hohlwellendrehdurchführung eine weitere Öffnung zum Austritt des Temperiermittels aufweist und die Antriebswelle als Gelenkwelle ausgestaltet ist.

In erfindungsgemäßer Weise ist zunächst erkannt worden, dass man in Abkehr zu der bisherigen Praxis das Temperiermittel allein mittels der Antriebswelle durch die Hohlwellendrehdurchführung hindurch in die Kalanderwalze einbringen muss und dass man die Verteilung des Temperiermittels durch die Hohlwellendrehdurchführung in die Kalanderwalze bringen kann, um eine sichere und kostengünstige Temperierung einer Kalanderwalze zu erreichen. Unter einer Temperierung kann hierbei eine Erwärmung oder eine Kühlung der Walze verstanden werden. Durch das Einbringen des Temperiermittels über die Hohlwellendrehdurchführung wird vermieden, dass teuere Spezialgetriebe benötigt werden

Im Hinblick auf eine besonders kostengünstige Ausgestaltung könnte die Antriebswelle als Hohlwelle ausgestaltet sein. Dies würde die Montage der Walzen vereinfacht, da Antrieb und Kalander nicht mehr genau ausgerichtet werden müssen, um eine Dichtheit zu gewährleisten.

Hinsichtlich einer besonders einfachen Ausgestaltung könnte in der Hohlwellendrehdurchführung eine Temperiermittelverteilung vorgesehen sein. Dies würde eine besonders einfache Einbringung des Temperiermittels in die Antriebswelle ermöglichen.

Im Rahmen einer besonders einfachen Konstruktion könnte die Temperiermittelverteilung mittels eines in der Hohlwellendrehdurchführung vorgesehenen Ringspalts erfolgen. Zusätzlich oder Alternativ könnte die Hohlwellendrehdurchführung eine Öffnung zur Antriebswelle der Kalanderwalze hin vorgesehen sein. Somit wäre es möglich, das Temperiermittel, welches sich beispielsweise in dem Ringspalt befindet und den Umfang der Hohlwellendrehdurchführung durchläuft, auf besonders einfache Weise in die Antriebswelle einzubringen.

Die Antriebswelle könnte dabei derart ausgestaltet sein, dass das Temperiermittel ins Innere der Kalanderwalze leitbar ist. Im Rahmen einer besonders einfachen Ausgestaltung könnte die Einleitung des Temperiermittels in die Kalanderwalze mittels einer Leitung erfolgen, welche zumindest teilweise innerhalb der Antriebswelle und/oder der Kalanderwalze verläuft und vorzugsweise konzentrisch zur Rotationsachse der Antriebswelle und/oder der Kalanderwalze angeordnet ist. Diese Leitung könnte verschieden ausgestaltet sein, also beispielsweise als Rohrleitung, welche sich konzentrisch innerhalb der Antriebsachse in die Kalanderwalze hinein erstreckt. Die Leitung könnte hierbei innerhalb der Antriebswelle eine Öffnung hin zu der Öffnung der Hohlwellendrehdurchführung aufweisen, so dass das Temperiermittel, welches durch die Hohlwellendrehdurchführung in die Antriebswelle eingeleitet wird, durch die Leitung aufgenommen werden kann.

Die Antriebswelle könnte zusätzlich oder alternativ derart ausgestaltet sein, dass das Temperiermittel aus dem Innern der Kalanderwalze leitbar ist. Hinsichtlich einer besonders einfachen Ausgestaltung könnte die Ausleitung des Temperiermittels aus der Kalanderwalze mittels mindestens einer Leitung erfolgen, welche zumindest teilweise innerhalb der Antriebswelle und/oder der Kalanderwalze verläuft und vorzugsweise konzentrisch zur Rotationsachse der Antriebswelle und/oder der Kalanderwalze angeordnet ist. Im Hinblick auf eine besonders bevorzugte Ausführungsform könnte die Leitung zur Ausleitung des Temperiermittels konzentrisch um die Leitung zur Einleitung des Temperiermittels in die Kalanderwalze eingeordnet sein. Die Leitung könnte somit als Doppelleitung ausgestaltet sein, in der das Temperiermittel innerhalb der Doppelleitung in die Walze hineingeleitet und am äußeren Teil der Doppelleitung aus der Kalanderwalze hinausgeleitet wird.

Zum Austausch des Temperiermittels oder um einen Temperiermittelkreislauf bilden zu können, könnte die Hohlwellendrehdurchführung eine weitere Öffnung zum Austritt des Temperiermittels aufweisen. Somit könnte das Temperiermittel, welches aus der Kalanderwalze ausgeleitet wird, durch aus dem Walzen-, Leitungs- und Hohlwellendrehdurchführungssystem geleitet werden, beispielsweise könnte ein Temperieraggregat vorgesehen sein, mittels dessen das Temperiermittel temperiert werden könnte. Das nunmehr eine gewünschte Temperatur aufweisende Temperiermittel könnte sodann der Kalanderwalze zugeführt werden, so dass ein Temperierkreislauf ermöglicht ist. Hierzu könnte die weitere Öffnung zum Austritt des Temperiermittels in einer Fluidverbindung mit dem in der Antriebswelle befindlichen Temperiermittel vorgesehen sein.

Ferner könnte eine Pumpe zum Transport des Temperiermittels innerhalb der Vorrichtung vorgesehen sein. Diese Pumpe könnte jede handelsübliche Ausgestaltung aufweisen.

Hinsichtlich einer besonders kostengünstigen Ausgestaltung könnte die Kalanderwalze mit einer Wechselhülse ausgestaltet sein. Hierbei wäre von besonderem Vorteil, dass die Seite, über welche die Wechselhülse ausgetauscht wird, besonders einfach erreichbar ist, da die Temperierung der Kalanderwalze über die Antriebsseite der Kalanderwalze erfolgt und somit keine aufwendigen Montage- und/oder Demontagearbeiten erforderlich sind, wenn eine Hülse gewechselt werden soll. Zusätzlich oder alternativ könnte die Temperierung der Kalanderwalze von der Antriebsseite aus erfolgen. Dies wäre besonders vorteilhaft, wenn es sich bei der Vorrichtung um einen Wechselhülsenkalander handelt, da die Hülse in diesem Fall zur nicht angetriebenen Seite gewechselt wird. Auf dieser Seite wäre der Einsatz einer üblichen Drehdurchführung schwierig.

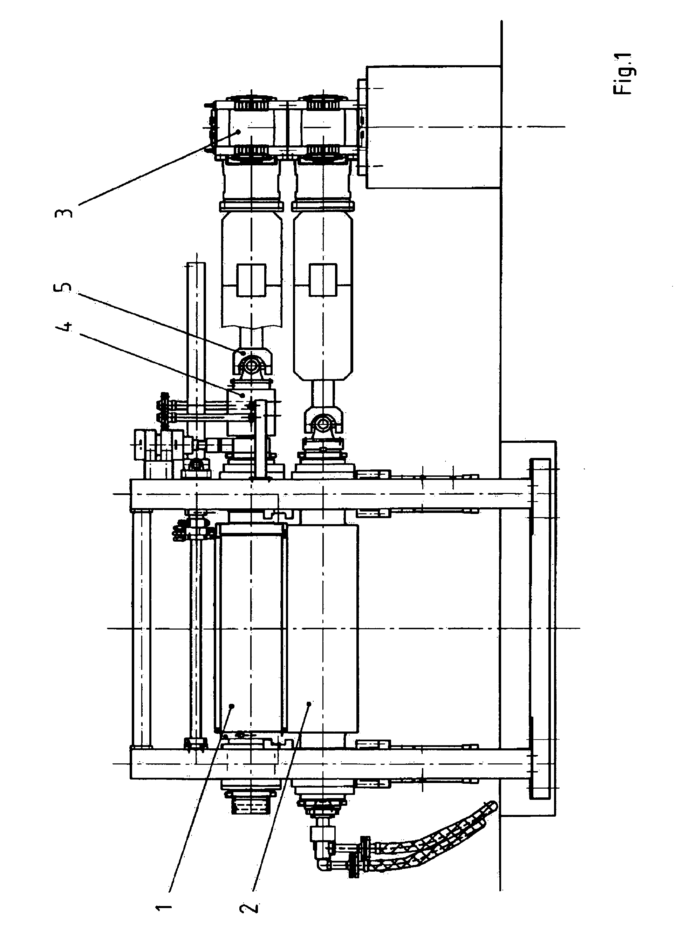

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung eines bevorzugten Ausführungsbeispiel der erfindungsgemäßen Vorrichtung zur Kalandrierung anhand der Zeichnung zu verweisen. In Verbindung mit der Erläuterung des bevorzugten Ausführungsbeispiels der erfindungsgemäßen Vorrichtung zur Kalandrierung anhand der Zeichnung werden auch im Allgemeinen bevorzugte Ausgestaltungen und Weiterbildungen der Lehre erläutert. In der Zeichnung zeigt die
- Fig. 1: in einer schematischen Darstellung, ein Ausführungsbeispiel einer erfin- dungsgemäßen Vorrichtung zur Kalandrierung und

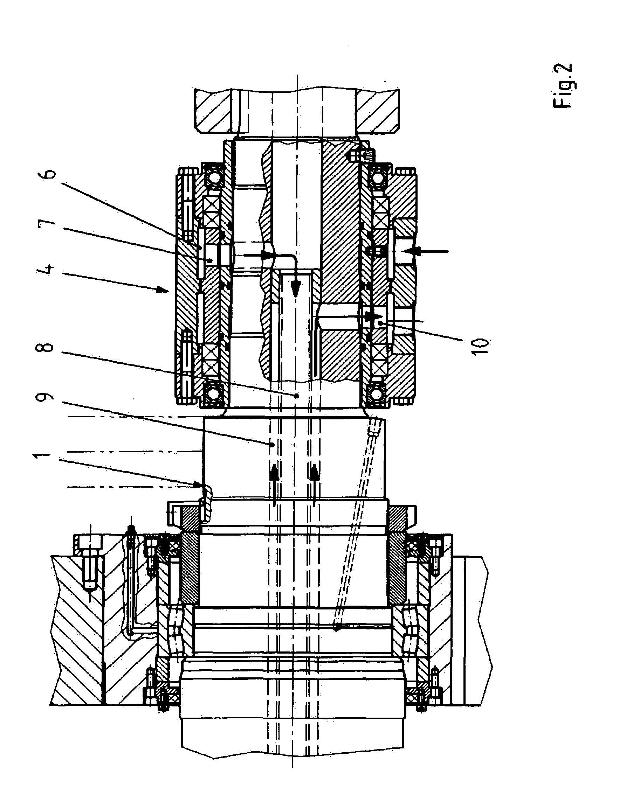

- Fig. 2: in einer schematischen Darstellung, eine Schnittzeichnung des Ausfüh- rungsbeispiels der Fig. 1.

Die in dem Ausführungsbeispiel gezeigte Vorrichtung zur Kalandrierung umfasst zwei Kalanderwalzen 1, 2, wobei die Kalanderwalzen 1, 2 mittels eines Antriebs 3 in eine Rotationsbewegung versetzbar sind. Die Kalanderwalze 1 ist hierbei temperierbar ausgestaltet, wobei die Temperierung mittels eines Temperiermittels erfolgt.

Erfindungsgemäß wird das Temperiermittel durch eine Hohlwellendrehdurchführung 4 in eine die Kalanderwalze 1 antreibende Antriebswelle 5 eingebracht. In vorteilhafter Weise ist die Antriebswelle 5 als Gelenkwelle ausgestaltet.

In der Hohlwellendrehdurchführung 4 ist zur Verteilung des Temperiermittels eine Temperiermittelverteilung 6 vorgesehen, die in diesem Ausführungsbeispiel als Ringspalt 6 ausgestaltet ist. Die Hohlwellendrehdurchführung 4 weist eine Öffnung 7 hin zur Antriebswelle 5 der Kalanderwalze 1 auf. Durch diese Öffnung 7 kann Temperiermittel, das den Ringspalt 6 der Hohlwellendrehdurchführung 4 durchtritt, aus der Hohlwellendrehdurchführung 4 herausgeleitet werden.

Die Antriebswelle 5 ist dabei derart ausgestaltet, dass das Temperiermittel ins Innere der Kalanderwalze 1 leitbar ist. Dies erfolgt mittels einer Leitung 8, welche innerhalb der Antriebswelle 5 und der Kalanderwalze 1 verläuft. Die Leitung 8 verläuft hierbei konzentrisch zur Rotationsachse der Antriebswelle 5 und der Kalanderwalze 1. Die Antriebswelle 5 ist dabei im weiteren derart ausgestaltet, dass das Temperiermittel aus dem Inneren der Kalanderwalze 1 leitbar ist.

Das Ausleiten des Temperiermittels aus der Kalanderwalze 1 erfolgt mittels einer Leitung 9, wobei die Leitung 9 innerhalb der Antriebswelle 5 und der Kalanderwalze 1 verläuft und konzentrisch zur Rotationsachse der Antriebswelle 5 und der Kalanderwalze 1 angeordnet ist. In dieser konkreten Ausführungsform sind die Leitungen 8 und 9 als eine Leitung mit zwei Fluidwegen, also als Doppelleitung, ausgestaltet, so dass das Temperiermittel im Inneren der Doppelleitung, d. h. in der Leitung 8, in die Kalanderwalze 1 eingeleitet wird und die Leitung 9 als Hohlleitung ausgestaltet ist, in der die Leitung 8 verläuft, so dass das Temperiermittel am äußeren Teil dieser Doppelleitung aus der Kalanderwalze 1 herausgeleitet wird. Es ist eine Buchse vorgesehen, welche, vorzugsweise mittig, zwischen den Radialbohrungen angeordnet ist. Diese Buchse ist in diesem Ausführungsbeispiel auf der Antriebsseite der Doppelleitung angeordnet, könnte jedoch auch anders angeordnet sein.

Die Hohlwellendrehdurchführung 4 weist zudem eine weitere Öffnung 10 auf, die zum Austritt des Temperiermittels aus der Hohlwellendrehdurchführung dient. Die weitere Öffnung 10 ist dabei in Fluidverbindung mit dem in der Antriebswelle 5 befindlichen Temperiermittel.

Hinsichtlich weiterer Details wird zur Vermeidung von Wiederholungen auf die allgemeine Beschreibung verwiesen.

Schließlich sei ausdrücklich darauf hingewiesen, dass das voranstehend beschriebene Ausführungsbeispiel lediglich zur Erörterung der beanspruchten Lehre dient, diese jedoch nicht auf das Ausführungsbeispiel einschränkt.

### Bezugszeichenliste

- 1: Kalanderwalze
- 2: Kalanderwalze
- 3: Antrieb
- 4: Hohlwellendrehdurchführung
- 5: Antriebswelle
- 6: Temperiermittelverteilung, Ringspalt
- 7: Öffnung
- 8: Leitung
- 9: Leitung
- 10: Öffnung

## Patentansprüche

1. Vorrichtung zur Kalandrierung von kontinuierlich hergestellten Gegenständen mit mindestens einer Kalanderwalze (1, 2), wobei die Kalanderwalze (1, 2) mittels mindestens eines Antriebs (3) in eine Rotationsbewegung versetzt wird, wobei mindestens eine Kalanderwalze (1, 2) temperierbar ist, wobei die Temperierung der Kalanderwalze (1, 2) mittels Temperiermittel erfolgt und wobei die Kalanderwalze (1, 2) mit einer Wechselhülse ausgestattet ist,
**dadurch gekennzeichnet, dass** das Temperiermittel durch eine Hohlwellendrehdurchführung (4) in eine die Kalanderwalze (1, 2) antreibende Antriebswelle (5) einbringbar ist, dass in der Hohlwellendrehdurchführung (4) eine Temperiermittelverteilung (6) vorgesehen ist, dass in der Hohlwellendrehdurchführung (4) eine Öffnung (7) hin zur Antriebswelle (5) der Kalanderwalze (1, 2) vorgesehen ist, dass die Hohlwellendrehdurchführung (4) eine weitere Öffnung (10) zum Austritt des Temperiermittels aufweist und dass die Antriebswelle (5) als Gelenkwelle ausgestaltet ist.

2. Vorrichtung nach Anspruch 1, **dadurch gekennzeichnet, dass** die Antriebswelle (3) als Hohlwelle ausgestaltet ist.

3. Vorrichtung nach Anspruch 1 oder 2, **dadurch gekennzeichnet, dass** die Temperiermittelverteilung (6) mittels eines in der Hohlwellendrehdurchführung (4) vorgesehenen Ringspalts (6) erfolgt.

4. Vorrichtung nach einem der Ansprüche 1 bis 3, **dadurch gekennzeichnet, dass** die Antriebswelle (5) derart ausgestaltet ist, dass das Temperiermittel ins Innere der Kalanderwalze (1, 2) leitbar ist.

5. Vorrichtung nach Anspruch 4, **dadurch gekennzeichnet, dass** die Einleitung des Temperiermittels in die Kalanderwalze (1, 2) mittels mindestens einer Leitung (9) erfolgt, welche zumindest teilweise innerhalb der Antriebswelle (5) und/oder der Kalanderwalze (1, 2) verläuft und vorzugsweise konzentrisch zur Rotationsachse der Antriebswelle (5) und/oder der Kalanderwalze (1, 2) angeordnet ist.

6. Vorrichtung nach einem der Ansprüche 1 bis 5, **dadurch gekennzeichnet, dass** die Antriebswelle (5) derart ausgestaltet ist, dass das Temperiermittel aus dem Inneren der Kalanderwalze (1, 2) leitbar ist.

7. Vorrichtung nach Anspruch 6, **dadurch gekennzeichnet, dass** das Ausleiten des Temperiermittels aus die Kalanderwalze (1, 2) mittels mindestens einer Leitung (9) erfolgt, welche zumindest teilweise innerhalb der Antriebswelle (5) und/oder der Kalanderwalze (1, 2) verläuft und vorzugsweise konzentrisch zur Rotationsachse der Antriebswelle (5) und/oder der Kalanderwalze (1, 2) angeordnet ist.

8. Vorrichtung nach einem der Ansprüche 1 - 7, **dadurch gekennzeichnet, dass** die weitere Öffnung (10) zum Austritt des Temperiermittels in einer Fluidverbindung mit dem in der Antriebswelle (5) befindlichen Temperiermittel ist.

9. Vorrichtung nach einem der Ansprüche 1 bis 8, **dadurch gekennzeichnet, dass** mindestens eine Pumpe zum Transport des Temperiermittels vorgesehen ist.

## Claims

1. A device for the calendering of continuously produced objects with at least one calender roll (1, 2), wherein the calender roll (1, 2) is set into a rotary movement by means of at least one drive (3), wherein at least one calender roll (1, 2) is able to be controlled with regard to temperature, wherein the temperature control of the calender roll (1, 2) takes place by means of temperature control medium and wherein the calender roll (1, 2) is equipped with a changeover sleeve,
**characterized in that** the temperature control medium is able to be introduced through a rotary hollow-shaft feedthrough (4) into a drive shaft (5) driving the calender roll (1, 2), that in the rotary hollow-shaft feedthrough (4) a temperature control medium distribution (6) is provided, that in the rotary hollow-shaft feedthrough (4) an opening (7) is provided towards the drive shaft (5) of the calender roll (1, 2), that the rotary hollow-shaft feedthrough (4) has a further opening (10) for the outlet of the temperature control medium and that the drive shaft (5) is constructed as a universal-joint shaft.

2. The device according to Claim 1, **characterized in that** the drive shaft (3) is constructed as a hollow shaft.

3. The device according to Claim 1 or 2, **characterized in that** the temperature control medium distribution (6) takes place by means of an annular gap (6) provided in the rotary hollow-shaft feedthrough (4).

4. The device according to any of Claims 1 to 3, **characterized in that** the drive shaft (5) is constructed such that the temperature control medium is able to be directed into the interior of the calender roll (1, 2).

5. The device according to Claim 4, **characterized in that** the introduction of the temperature control medium into the calender roll (1, 2) takes place by means of at least one conduit (9), which runs at least partially inside the drive shaft (5) and/or the calender roll (1, 2) and is preferably arranged concentrically to the rotation axis of the drive shaft (5) and/or of the calender roll (1, 2).

6. The device according to any of Claims 1 to 5, **characterized in that** the drive shaft (5) is constructed such that the temperature control medium is able to be directed out of the interior of the calender roll (1, 2).

7. The device according to Claim 6, **characterized in that** the directing of the temperature control medium out of the calender roll (1, 2) takes place by means of at least one conduit (9), which runs at least partially inside the drive shaft (5) and/or the calender roll (1, 2) and is preferably arranged concentrically to the rotation axis of the drive shaft (5) and/or of the calender roll (1, 2).

8. The device according to any of Claims 1 - 7, **characterized in that** the further opening (10) for the outlet of the temperature control medium is in a fluid communication with the temperature control medium situated in the drive shaft (5).

9. The device according to any of Claims 1 to 8, **characterized in that** at least one pump is provided for the transportation of the temperature control medium.

## Revendications

1. Dispositif doté d'au moins un rouleau de calandre (1, 2) pour calandrer des objets fabriqués en continu, dans lequel le rouleau de calandre (1, 2) est transféré dans le sens de rotation au moyen d'au moins un entraînement (3), un rouleau de calandre (1, 2) pouvant au moins être mis en température, la mise en température du rouleau de calandre (1, 2) s'effectuant par des moyens de mise en température et le rouleau de calandre (1, 2) étant doté d'un manchon interchangeable,
**caractérisé en ce que** le moyen de mise en température peut être introduit par un passage tournant par arbre creux (4) dans un arbre d'entraînement (5) entraînant le rouleau de calandre (1, 2), **en ce que** dans le passage tournant par arbre creux (4), une ouverture est prévue en direction de l'arbre d'entraînement (5) du rouleau de calandre (1, 2), que le passage tournant par arbre creux (4) présente une autre ouverture (10) pour faire sortir le moyen de mise en température et que l'arbre d'entraînement (5) est un arbre articulé.

2. Dispositif selon la revendication 1, **caractérisé en ce que** l'arbre d'entraînement (5) est un arbre creux.

3. Dispositif selon la revendication 1 ou 2, **caractérisé en ce que** la répartition du moyen de mise en température (6) s'effectue au moyen d'une fente annulaire (6) prévue dans le passage tournant par arbre creux (4).

4. Dispositif selon l'une des revendications 1 à 3, **caractérisé en ce que** l'arbre d'entraînement (5) est ainsi formé que le moyen de mise en température peut être conduit à l'intérieur du rouleau de calandre (1, 2).

5. Dispositif selon la revendication 4, **caractérisé en ce que** l'introduction du moyen de mise en température dans le rouleau de calandre (1, 2) s'effectue au moyen d'au moins une conduite (9), laquelle s'étend au moins partiellement à l'intérieur de l'arbre d'entraînement (5) et/ou du rouleau de calandre (1, 2) et de préférence de manière concentrique à l'axe de rotation de l'arbre d'entraînement (5) et/ou du rouleau de calandre (1, 2).

6. Dispositif selon l'une des revendications 1 à 5, **caractérisé en ce que** l'arbre d'entraînement (5) est ainsi formé que le moyen de mise en température peut être conduit à l'extérieur du rouleau de calandre (1, 2).

7. Dispositif selon la revendication 6, **caractérisé en ce que** la sortie du moyen de mise en température hors du rouleau de calandre (1, 2) s'effectue au moyen d'au moins une conduite (9), laquelle s'étend au moins partiellement à l'intérieur de l'arbre d'entraînement (5) et/ou du rouleau de calandre (1, 2) et de préférence de manière concentrique à l'axe de rotation de l'arbre d'entraînement (5) et/ou du rouleau de calandre (1, 2).

8. Dispositif selon l'une des revendications 1 à 7, **caractérisé en ce que** l'autre ouverture (10) pour la sortie du moyen de mise en température est en liaison fluidique avec le moyen de température se trouvant dans l'arbre d'entraînement (5).

9. Dispositif selon l'une des revendications 1 à 8, **caractérisé en ce qu'**au moins une pompe est prévue pour le transport du moyen de mise en température.
